# EUROPÄISCHE PATENTSCHRIFT

(11) **EP 3 744 588 B1**
(45) Veröffentlichungstag und Bekanntmachung des Hinweises auf die Patenterteilung: **01.12.2021**
(21) Anmeldenummer: 20169981.6
(22) Anmeldetag: 16.04.2020
(51) Int. Cl.: B60T 7/22, B60T 17/22, B60T 7/16

(54) **VERFAHREN ZUR INTERAKTION ZWISCHEN EINEM FAHRZEUG UND EINER PERSON, BERÜHRUNGSDETEKTIONSEINRICHTUNG FÜR EIN FAHRZEUG UND FAHRZEUG**
METHOD FOR INTERACTION BETWEEN A VEHICLE AND A PERSON, A TOUCH DETECTION DEVICE FOR A VEHICLE AND A VEHICLE
PROCÉDÉ D'INTERACTION ENTRE UN VÉHICULE ET UNE PERSONNE, DISPOSITIF DE DÉTECTION TACTILE POUR UN VÉHICULE ET VÉHICULE

(30) Priorität: 03.05.2019 DE 102019206424
(43) Veröffentlichungstag der Anmeldung: 02.12.2020
(73) Patentinhaber: VOLKSWAGEN AG, 38440 Wolfsburg (DE)
(72) Erfinder: Yan, Baixuan, 38444 Wolfsburg (DE); Herz, Josephine, 39345 Satuelle (Flechtingen) (DE); Tümler, Johannes, 39167 Wellen (DE); Haar, Adrian, 30173 Hannover (DE); Bendewald, Lennart, 38442 Wolfsburg (DE); Wyszka, Robert Jan, 30165 Hannover (DE)

(56) Entgegenhaltungen:
- CN-A- 104 724 044
- CN-A- 109 466 480
- DE-A1-102005 012 290
- DE-A1-102006 012 336
- DE-A1-102011 111 422
- US-A1- 2018 102 055
- US-A1- 2019 016 316
- US-A1- 2019 031 100

## Beschreibung

Die Erfindung betrifft ein Verfahren zur Interaktion zwischen einem Fahrzeug und mindestens einer außerhalb des Fahrzeuges sich befindlichen Person sowie eine Berührungsdetektionseinrichtung für ein Fahrzeug mit mindestens einem berührungssensitiven Bereich auf einer Außenkontur des Fahrzeuges sowie ein Fahrzeug mit einer Bewegungsdetektionseinrichtung.

Verfahren und Berührungsdetektionseinrichtungen der gattungsgemäßen Art sind bekannt. So offenbart DE 10 2006 012 336 A1 eine Einrichtung und ein Verfahren zur Berührungsdetektion für ein Kraftfahrzeug. Es ist ein Berührungssensor und eine fahrzeugeigene Auswerteeinrichtung vorgesehen. Der Berührungssensor ist dabei beispielsweise als ein auf einem Kraftfahrzeugteil aufgebrachter und elektrisch mit der Auswerteeinrichtung kontaktierter piezoelektrischer Lack ausgebildet, wobei die Auswerteeinrichtung bei Berührung des piezoelektrischen Lacks mit einem Objekt mindestens ein Ausgangssignal erzeugt.

DE 10 2011 111 422 A1 offenbart ein Multifunktionsband für ein Kraftfahrzeug, das als bandförmiges Verkleidungselement für eine Karosserie des Kraftfahrzeuges ausgebildet ist und mit dem Informationen von dem Fahrzeugführer oder anderen Verkehrsteilnehmern ausgegeben werden können. Das Multifunktionsband kann ein Bedienelement in Form einer berührungsempfindlichen Fläche umfassen.

Der Erfindung liegt die Aufgabe zugrunde, ein Verfahren sowie eine Berührungsdetektionseinrichtung und ein Fahrzeug der gattungsgemäßen Art zu schaffen, dem die Sicherheit von außerhalb des Fahrzeuges sich befindenden Personen verbessert werden kann.

Erfindungsgemäß wird diese Aufgabe durch ein Verfahren mit den in Anspruch 1 genannten Merkmalen gelöst. Dadurch, dass die mindestens eine Person durch die Interaktion dem Fahrzeug eine Bewegungsabsicht in Bezug relativ zum Fahrzeug mitteilt und das Ausgangssignal des Steuergerätes des Fahrzeugs das Fahrzeug in seiner Bewegung auf die Bewegungsabsicht der mindestens einen Person abstimmt, ist vorteilhaft möglich, eine verbesserte und sichere Interaktion zwischen dem Fahrzeug, beispielsweise dem Fahrzeugführer, und der mindestens einen außerhalb des Fahrzeugs sich befindenden Person zu erreichen. Insbesondere kann so die Sicherheit erhöht werden, wenn die weitere sich außerhalb des Fahrzeugs befindende Person ein Fahrradfahrer ist und das Fahrzeug die Absicht hat abzubiegen.

In bevorzugter Ausgestaltung der Erfindung ist vorgesehen, dass das Ausgangssignal des Steuergerätes das Fahrzeug für zumindest eine vorgebbare Zeitspanne an einer Weiterfahrt hindert. Hier wird vorteilhaft erreicht, dass mit großer Sicherheit eine Kollision mit der mindestens einen außerhalb des Fahrzeuges sich befindenden Person entsprechend der Bewegungsabsicht verhindert wird.

Ferner ist in bevorzugter Ausgestaltung der Erfindung vorgesehen, dass die Interaktion nur aktiviert wird, wenn die beabsichtigten Bewegungsrichtungen des Fahrzeugs und der wenigstens einen Person sich auf einem eventuellen Kollisionskurs befinden. Hierdurch kann erreicht werden, dass das Ausgangssignal durch das Steuergerät nur dann generiert wird, wenn tatsächlich eine Kollision mit der wenigstens einen Person zu erwarten ist. Wird sich das Fahrzeug beispielsweise in eine von der Person weg gerichteten Bewegungsrichtung fortbewegen, kann das Ausgangssignal so ebenfalls unterdrückt werden.

Darüber hinaus ist in bevorzugter Ausgestaltung der Erfindung vorgesehen, dass die wenigstens eine Person durch den berührungssensitiven Bereich eine Rückinformation erhält, dass das Fahrzeug die Bewegungsabsicht der wenigstens einen Person registriert hat. Hiermit wird auch für die wenigstens eine Person die Sicherheit erhöht, da diese nun weiß, dass seine mitgeteilte Bewegungsabsicht durch das Fahrzeug erkannt und eine entsprechende Reaktion des Fahrzeuges selber oder jedenfalls eines Fahrzeugführers zu erwarten ist.

Darüber hinaus ist in weiterer bevorzugter Ausgestaltung der Erfindung vorgesehen, dass die wenigstens eine Person sich auf einem Fahrrad, Roller, Skatebord oder dergleichen neben dem Fahrzeug bewegt. Hierdurch können weitere, jedenfalls nicht motorisierte Verkehrsteilnehmer dem Fahrzeug ihre Bewegungsabsicht in unmittelbarer Nähe des Fahrzeuges in einfacher Weise mitteilen.

Schließlich ist in weiterer bevorzugter Ausgestaltung der Erfindung vorgesehen, dass das Ausgangssignal des Steuergerätes akustisch und/oder optisch und/oder haptisch ausgegeben wird. Somit kann die Reaktion des Fahrzeuges in einfacher Weise gegenüber den Fahrzeuginsassen und/oder der mindestens einen außerhalb des Fahrzeugs sich befindenden Person kundgetan werden.

Die Aufgabe wird ferner durch eine Berührungsdetektionseinrichtung für ein Fahrzeug mit den in Anspruch 7 genannten Merkmalen gelöst. Dadurch, dass eine Signalausgangsschaltung eines Steuergerätes eines Fahrzeuges derart ausgelegt ist, dass über mindestens einen berührungssensitiven Bereich an einer Außenkontur des Fahrzeuges eine Bewegungsabsicht mindestens einer neben dem Fahrzeug befindlichen Person erfassbar ist und hiervon abhängig mindestens ein Ausgangssignal an das Fahrzeug und/oder einen Fahrzeugführer ausgebbar ist, wird vorteilhaft erreicht, dass in einfacher Weise das Fahrzeug mit einem Assistenzsystem ausgestattet ist, das der Erhöhung der Verkehrssicherheit dient.

In bevorzugter Ausgestaltung der Erfindung ist vorgesehen, dass der berührungssensitive Bereich auf der Außenkontur des Fahrzeuges um das Fahrzeug umlaufend und insbesondere in einer Höhe angeordnet ist, die von neben dem Fahrzeug sich befindenden Personen gut erreichbar ist. Hierdurch kann in einfacher Weise die Kommunikation-Interaktion zwischen der Person im Fahrzeug ausgelöst werden, unabhängig davon wo die Person sich gerade befindet.

Darüber hinaus ist in bevorzugter Ausgestaltung der Erfindung vorgesehen, dass der berührungssensitive Bereich gleichzeitig eine Anzeigeeinrichtung ist. Hierdurch wird vorteilhaft möglich, der wenigstens einen Person zu signalisieren, dass seine Kommunikation mit dem Fahrzeug erfolgreich ist und das Fahrzeug mit der Person eine Interaktion aufnimmt.

Die Aufgabe wird ferner durch ein Fahrzeug mit den in Anspruch 10 genannten Merkmalen gelöst.

Die Erfindung wird nachfolgend in Ausführungsbeispielen anhand der zugehörigen Zeichnungen näher erläutert. Es zeigen:
- Figur 1: eine schematische Ansicht eines Fahrzeuges mit einer sich außerhalb des Fahrzeuges befindenden Person in einer ersten Ausführungsvariante;
- Figur 2: das Fahrzeug mit der Person in einer zweiten Ausführungsvariante;
- Figur 3: ein weiteres Ausführungsbeispiel eines Fahrzeuges mit einer sich neben dem Fahrzeug befindenden Person; und
- Figur 4: eine Schaltungsanordnung der erfindungsgemäßen Berührungsdetektionseinrichtung.

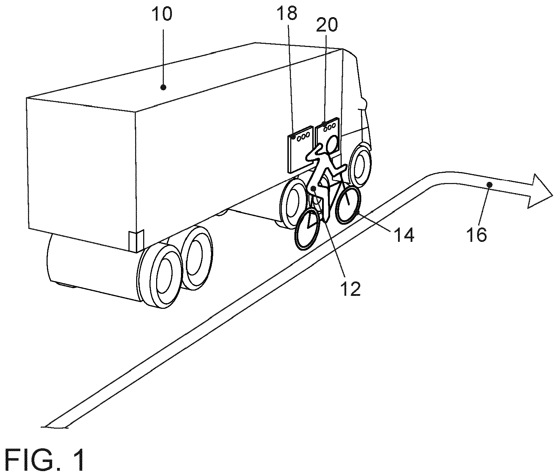

Figur 1 zeigt ein insgesamt mit 10 bezeichnetes Fahrzeug, das im dargestellten Ausführungsbeispiel ein Lastkraftwagen ist. Das Fahrzeug 10 befindet sich in Halteposition an einer im Detail nicht näher dargestellten Kreuzung, Einfahrt oder dergleichen eines Fahrweges. Neben dem Fahrzeug befindet sich eine Person 12, welche im vorliegend gezeigten Beispiel auf einem Fahrrad 14 unterwegs ist. Das Fahrzeug 10 beabsichtigt entsprechend des dargestellten Pfeiles 16 nach rechts an der Kreuzung oder dergleichen abzubiegen.

Das Fahrzeug 10 besitzt an seiner Außenkontur, hier an der seitlichen Beplankung der rechten Seite des Fahrzeuges 10 zwei berührungssensitive Bereiche 18 und 20. Die berührungssensitiven Bereiche 18 und 20 sind unterschiedlich gekennzeichnet und können wahlweise von der Person 12 berührt werden. Der berührungssensitive Bereich 18 ist mit der Beschriftung "Ich warte" und der berührungssensitive Bereich 20 mit der Beschriftung "Ich fahre" beschriftet.

Durch Berühren eines der berührungssensitiven Bereiche 18 oder 20 durch die Person 12 wird dem Fahrzeug somit eine Bewegungsabsicht der Person mitgeteilt.

Das Fahrzeug 10 kann nunmehr - in später noch näher erläuterter Weise - entsprechend reagieren, indem dieses beispielsweise nicht weiter fährt und solange wartet, bis die Person 12 dem Fahrzeugführer oder einem geeigneten Erkennungssystem des Fahrzeuges zu erkennen gibt, dass es den unmittelbaren Umgebungsbereich des Fahrzeuges 10 verlassen hat.

Wenn die Person 12 durch Betätigen des berührungssensitiven Bereichs 18 signalisiert, dass sie wartet, kann das Fahrzeug den Kreuzungsbereich verlassen und die Person 12 wird dann eigeninitiativ - nach erfolgtem Abbiegevorgang des Fahrzeuges 10 - seine Bewegung fortsetzen.

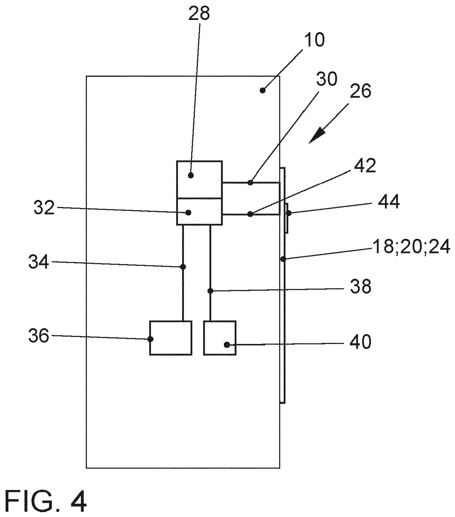

Die berührungssensitiven Bereichen 18 und 20 können an definierten oder frei wählbaren Bereichen an der Außenkontur des Fahrzeuges vorgesehen sein. Die berührungssensitiven Bereiche 18 und 20 sind entweder drahtgebunden oder drahtlos mit einem Steuergerät (siehe Figur 4) des Fahrzeuges 10 verbunden. Es erfolgt eine direkte Interaktion von der Außenkontur des Fahrzeuges 10 und somit eine einfache Interaktion zwischen der Person 12 und dem Fahrzeug 10.

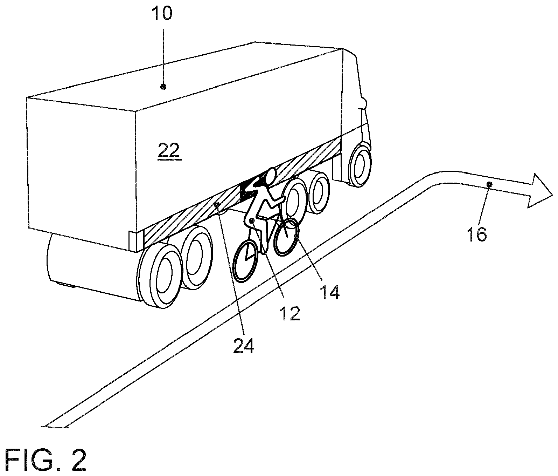

Figur 2 zeigt eine weitere Ausführungsvariante, wobei gleiche Merkmale wie in Figur 1 mit gleichen Bezugszeichen versehen und nicht nochmals erläutert sind.

Das Fahrzeug 10 besitzt hierbei an seiner rechten Seite 22 einen sich über die gesamte Länge des Fahrzeugs 10 erstreckenden berührungssensitiven Bereich 24.

Gemäß der in Figur 2 dargestellten Variante beabsichtigt das Fahrzeug 10 an der Kreuzung entsprechend des Pfeiles 16 nach rechts abzubiegen. Die Person 12 erkennt das anhand der vom Fahrzeug 10 gesetzten Blinksignale. Durch Berühren des berührungssensitiven Bereiches 24 kann dem Fahrzeug 10 bzw. einem Fahrzeugführer mitgeteilt werden, dass sich neben dem Fahrzeug 10 die Person 12, in diesem Fall auf dem Fahrrad 14, befindet und sie den Fahrweg geradeaus fahren will. Die Bewegungsabsicht der Person 12 ist also nicht entsprechend des Pfeiles 16 Abbiegen sondern Geradeausfahren. Das Fahrzeug 10 bzw. der Fahrzeugführer erkennt dies und kann seine Abbiegeabsicht zurückstellen bis die Person 12 mit dem Fahrrad 14 das Fahrzeug 10 erkennbar passiert hat.

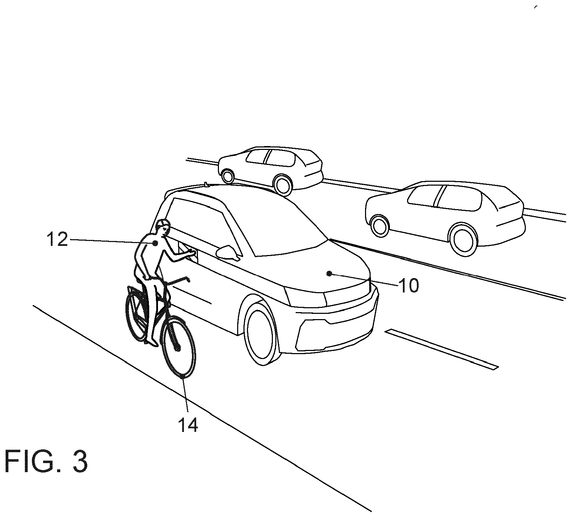

Figur 3 zeigt eine Ausführungsvariante, bei der das Fahrzeug 10 von einem Personenkraftwagen gebildet ist. Es wird verdeutlicht, dass die berührungssensitiven Bereiche 18, 20 und/oder 24 nicht nur bei Lastkraftwagen, bei denen häufig eine eingeschränkte Sicht auf die rechte Seite besteht, sondern auch bei Personenkraftwagen zur Erhöhung der Sicherheit und zur Herstellung einer möglichen Interaktion zwischen dem Fahrzeug 10 und einer sich neben dem Fahrzeug befindenden Person 12 vorgesehen sein können.

Figur 4 zeigt die erfindungsgemäße Berührungsdetektionseinrichtung 26 in einem schematischen Blockschaltbild. Das Fahrzeug 10 ist mit dem berührungssensitiven Bereich 18, 20 und/oder 24 ausgestattet. Wie bereits erläutert kann der berührungssensitive Bereich 24 beispielsweise um den gesamten Umfang des Fahrzeuges 10 angeordnet sein.

Innerhalb des Fahrzeugs ist ein Steuergerät 28 vorgesehen, das über eine Signalleitung 30 mit dem berührungssensitiven Bereich 18, 20 und/oder 24 verbunden ist. Die Signalleitung 30 kann drahtgebunden oder auch drahtlos ausgebildet sein.

Dem Steuergerät 28 ist eine Signalausgangsschaltung 32 zugeordnet, die über eine Signalleitung 34 mit einer Einrichtung 36 zur Beeinflussung des Fahrverhaltens des Fahrzeuges 10 verbunden ist.

Die Signalausgangsschaltung 32 ist ferner über eine Signalleitung 38 mit einem Signalgeber 40 des Fahrzeuges 10 verbunden. Der Signalgeber 40 kann eine akustische und/oder optische und/oder haptische Signalisierung bewirken.

Die Signalausgangsschaltung 32 ist ferner über eine Signalleitung 42 mit dem berührungssensitiven Bereich 18, 20 und/oder 24 verbunden. Der sensitive Bereich 18, 20 und/oder 24 kann eine integrierte oder zusätzliche Anzeigeeinrichtung 44 umfassen. Die Anzeigeeinrichtung 44 kann ein Display, ein Leuchtmittel oder eine andere geeignete Anzeigemöglichkeit umfassen.

Die in Figur 4 dargestellte Berührungsdetektionsvorrichtung 26 zeigt folgende Funktion.

Bei Berühren des berührungssensitiven Bereiches 18, 20 und/oder 24 durch eine in Figur 4 nicht dargestellte Person wird dem Steuergerät 28 über Signalleitung 30 ein entsprechendes Signal zugeführt. Das Steuergerät 28 erfasst das Signal und aktiviert die Signalausgangsschaltung 32. Die Signalausgangsschaltung 32 kann dann entweder über Signalleitung 34 der Einrichtung 36 einen Steuerbefehl geben, die die Einrichtung veranlasst eine Weiterfahrt des Fahrzeuges 10 zu unterbinden.

Die Signalausgangsschaltung 32 kann ferner über Signalleitung 38 dem Signalgeber 40 ein Auslösesignal zur Wahrnehmung einer optischen und/oder akustischen und/oder haptischen Signalisierung übermitteln.

Die Signalausgangsschaltung 32 kann ferner über Signalleitung 42 der Anzeigeeinrichtung 44 ein Auslösesignal zur Darstellung einer bestimmten Information, die für die, die berührungssensitiven Bereiche 18, 20 und/oder 24 berührenden Person gedacht ist.

Nach weiteren nicht dargestellten Ausführungsbeispielen kann vorgesehen sein, dass der berührungssensitive Bereich 18, 20 und/oder 24 bei Annäherung einer Person 12 sich automatisch aus der Kontur des Fahrzeuges 10 herausbewegt und somit sich der Person 12 zur besseren Erreichbarkeit annähert.

Die berührungssensitiven Bereiche 18, 20 und/oder 24 können auch so ausgewählt werden, dass eine Annäherung der Person oder eines Körperteils der Person ausreicht, um die Signalisierung an das Steuergerät 28 auszulösen, ohne dass die Person 12 unmittelbar die berührungssensitiven Bereiche 18, 20 und/oder 24 berührt.

Auch können die berührungssensitiven Bereiche 18, 20 und/oder 24 so ausgewählt sein, dass eine Gestensteuerung, das heißt eine bestimmte Handbewegung, beispielsweise zur Aktivierung des Steuergeräts 28 erkannt wird.

### Bezugszeichenliste

- 10: Fahrzeug
- 12: Person
- 14: Fahrrad
- 16: Pfeil
- 18: berührungssensitiven Bereiche
- 20: berührungssensitiven Bereiche
- 22: Seite
- 24: berührungssensitiven Bereiche
- 26: Berührungsdetektionseinrichtung
- 28: Steuergerät
- 30: Signalleitung
- 32: Signalausgangsschaltung
- 34: Signalleitung
- 36: Einrichtung
- 38: Signalleitung
- 40: Einrichtung
- 42: Signalleitung
- 44: Anzeigeeinrichtung

## Patentansprüche

1. Verfahren zur Interaktion zwischen einem Fahrzeug (10) und mindestens einer außerhalb des Fahrzeuges (10) sich befindenden Person (12) mit folgenden Schritten
- Berühren mindestens eines berührungssensitiven Bereiches (18, 20, 24) des Fahrzeuges (10) durch mindestens eine Person (12),
- Übermitteln eines Signals durch den wenigstens einen sensitiven Bereich (18, 20, 24) an ein Steuergerät (28) des Fahrzeuges (10),
- Ausgeben eines Ausgangssignals durch das Steuergerät (28) für wenigstens eine Einrichtung (36, 40) des Fahrzeugs (10),
**dadurch gekennzeichnet, dass**
- die mindestens eine Person (12) durch die Interaktion dem Fahrzeug (10) eine Bewegungsabsicht in Bezug relativ zum Fahrzeug (10) mitteilt und
- das Ausgangssignal des Steuergeräts (28) das Fahrzeug (10) in seiner Bewegung auf die Bewegungsabsicht der mindestens einen Person (12) abstimmt.

2. Verfahren nach Anspruch 1, **dadurch gekennzeichnet, dass** das Ausgangssignal des Fahrzeugs (10) für zumindest eine vorgebbare Zeitspanne das Fahrzeug an einer Weiterfahrt hindert.

3. Verfahren nach einem der vorgehenden Ansprüche, **dadurch gekennzeichnet, dass** die Interaktion nur aktiviert wird, wenn die beabsichtigte Bewegungsrichtung des Fahrzeugs (10) und der mindestens einen Person (12) sich auf einem eventuellen Kollisionskurs befinden.

4. Verfahren nach einem der vorhergehenden Ansprüche, **dadurch gekennzeichnet, dass** die mindestens eine Person (12) durch den berührungssensitiven Bereich (18, 20, 24) eine Rückinformation erhält, dass das Fahrzeug (10) die Bewegungsabsicht der mindestens einen Person (12) registriert hat.

5. Verfahren nach einem der vorhergehenden Ansprüche, **dadurch gekennzeichnet, dass** die mindestens eine Person (12) sich auf einem Fahrrad (14), Roller, Skatebord oder dergleichen neben dem Fahrzeug (10) bewegt.

6. Verfahren nach einem der vorhergehenden Ansprüche, **dadurch gekennzeichnet, dass** das Ausgangssignal akustisch und/oder optisch und/oder haptisch ausgegeben wird.

7. Berührungsdetektionseinrichtung (26) für ein Fahrzeug (10) mit mindestens einem berührungssensitiven Bereich (18, 20, 24) auf einer Außenkontur des Fahrzeugs (10), eine mit dem berührungssensitiven Bereich (18, 20, 24) signaltechnisch verbundenen Steuergerät (28), sowie einer Signalausgangsschaltung (32) des Steuergerätes (28), **dadurch gekennzeichnet, dass** die Signalausgangsschaltung (32) derart ausgelegt ist, dass über den mindestens einen berührungssensitiven Bereich (18, 20, 24) eine Bewegungsabsicht mindestens einer neben dem Fahrzeug (10) sich befindlichen Person (12) erfassbar ist und hiervon abhängig mindestens ein Ausgangssignal an das Fahrzeug (10) und/oder einen Fahrzeugführer ausgebbar ist.

8. Berührungsdetektionseinrichtung nach Anspruch 7, **dadurch gekennzeichnet, dass** der berührungssensitive Bereich (18, 20, 24) eine Anzeigeeinrichtung (44) umfasst.

9. Berührungsdetektionseinrichtung nach einem der Ansprüche 7 oder 8, **dadurch gekennzeichnet, dass** der berührungssensitive Bereich (24) sich um den gesamten Umfang des Fahrzeuges (10) erstreckt.

10. Fahrzeug (10) mit einer Berührungserkennungseinrichtung (26) nach einem der Ansprüche 7 bis 9.

## Claims

1. Method for interaction between a vehicle (10) and at least one person (12) situated outside the vehicle (10), comprising the following steps:
- touching at least one touch-sensitive area (18, 20, 24) of the vehicle (10) by at least one person (12),
- transmitting a signal to a control device (28) of the vehicle (10) via the at least one sensitive area (18, 20, 24),
- outputting an output signal for at least one device (36, 40) of the vehicle (10) via the control device (28), **characterized in that**
- the at least one person (12) informs the vehicle (10) of an intended movement relative to the vehicle (10) via the interaction, and
- the output signal of the control device (28) coordinates the movement of the vehicle (10) with the intended movement of the at least one person (12).

2. Method according to Claim 1, **characterized in that** the output signal of the vehicle (10) prevents the vehicle from continuing to travel for at least a predefinable period of time.

3. Method according to one of the preceding claims, **characterized in that** the interaction is activated only if the intended direction of movement of the vehicle (10) and the at least one person (12) are on a possible collision course.

4. Method according to one of the preceding claims, **characterized in that** the at least one person (12) receives feedback information via the touch-sensitive area (18, 20, 24) that the vehicle (10) has registered the intended movement of the at least one person (12).

5. Method according to one of the preceding claims, **characterized in that** the at least one person (12) is moving next to the vehicle (10) on a bicycle (14), roller skates, a skateboard, or the like.

6. Method according to one of the preceding claims, **characterized in that** the output signal is output acoustically and/or optically and/or haptically.

7. Touch detection device (26) for a vehicle (10) comprising at least one touch-sensitive area (18, 20, 24) on an external contour of the vehicle (10), a control device (28) which is connected to the touch-sensitive area (18, 20, 24) using signal technology, and a signal output circuit (32) of the control device (28), **characterized in that** the signal output circuit (32) is designed in such a way that an intended movement of at least one person (12) situated next to the vehicle (10) is detectable via the at least one touch-sensitive area (18, 20, 24) and, as a function thereof, at least one output signal can be output to the vehicle (10) and/or a vehicle driver.

8. Touch detection device according to Claim 7, **characterized in that** the touch-sensitive area (18, 20, 24) comprises an indicating device (44).

9. Touch detection device according to one of Claims 7 or 8, **characterized in that** the touch-sensitive area (24) extends around the entire circumference of the vehicle (10) .

10. Vehicle (10) comprising a touch detection device (26) according to one of Claims 7 to 9.

## Revendications

1. Procédé d'interaction entre un véhicule (10) et au moins une personne (12) se trouvant à l'extérieur du véhicule (10), comprenant les étapes consistant à
- toucher au moins une zone sensible au contact (18, 20, 24) du véhicule (10) par au moins une personne (12),
- transmettre un signal à travers ladite au moins une zone sensible (18, 20, 24) à un appareil de commande (28) du véhicule (10),
- sortir un signal de sortie par l'appareil de commande (28) pour au moins un équipement (36, 40) du véhicule (10),
**caractérisé en ce que**
- ladite au moins une personne (12) communique au véhicule (10) une intention de déplacement par rapport au véhicule (10) par l'intermédiaire de l'interaction, et
- le signal de sortie de l'appareil de commande (28) adapte le véhicule (10) au niveau de son déplacement à l'intention de déplacement de ladite au moins une personne (12).

2. Procédé selon la revendication 1, **caractérisé en ce que** le signal de sortie du véhicule (10) empêche la poursuite du déplacement du véhicule pendant au moins un délai prédéfinissable.

3. Procédé selon l'une quelconque des revendications précédentes, **caractérisé en ce que** l'interaction n'est activée que lorsque les directions de déplacement prévues du véhicule (10) et de ladite au moins une personne (12) se trouvent sur une trajectoire de collision possible.

4. Procédé selon l'une quelconque des revendications précédentes, **caractérisé en ce que** ladite au moins une personne (12) obtient par la zone sensible au contact (18, 20, 24) une information de retour indiquant que le véhicule (10) a enregistré l'intention de déplacement de ladite au moins une personne (12).

5. Procédé selon l'une quelconque des revendications précédentes, **caractérisé en ce que** ladite au moins une personne (12) se déplace à vélo (14), en trottinette, en skateboard ou similaires à côté du véhicule (10).

6. Procédé selon l'une quelconque des revendications précédentes, **caractérisé en ce que** le signal de sortie est sorti de manière acoustique et/ou optique et/ou haptique.

7. Equipement de détection de contact (26) pour un véhicule (10), comprenant au moins une zone sensible au contact (18, 20, 24) sur un contour extérieur du véhicule (10), un appareil de commande (28) relié en transmission de signal à la zone sensible au contact (18, 20, 24), ainsi qu'un circuit de sortie de signal (32) de l'appareil de commande (28), **caractérisé en ce que** le circuit de sortie de signal (32) est conçu de telle sorte que ladite au moins une zone sensible au contact (18, 20, 24) permet de détecter une intention de déplacement d'au moins une personne (12) se trouvant à côté du véhicule (10), et en fonction de cela, au moins un signal de sortie peut être sorti à destination du véhicule (10) et/ou d'un conducteur.

8. Equipement de détection de contact selon la revendication 7, **caractérisé en ce que** la zone sensible au contact (18, 20, 24) comprend un équipement d'affichage (44).

9. Equipement de détection de contact selon l'une quelconque des revendications 7 ou 8, **caractérisé en ce que** la zone sensible au contact (24) s'étend sur toute la circonférence du véhicule (10).

10. Véhicule (10) comprenant un équipement de détection de contact (26) selon l'une quelconque des revendications 7 à 9.
